# EUROPÄISCHE PATENTANMELDUNG

(11) **EP 0 649 081 A1**
(43) Veröffentlichungstag der Anmeldung: **19.04.1995**
(21) Anmeldenummer: 94116361.0
(22) Anmeldetag: 18.10.1994
(51) Int. Cl.: G06F 1/16

(54) **Dockingstation zum Einsetzen eines Kleincomputers**

(30) Priorität: 18.10.1993 DE 9315863 U; 15.03.1994 DE 4408702
(71) Anmelder: Nickol, Harald, D-55276 Oppenheim (DE)
(72) Erfinder: Nickol, Harald, D-55276 Oppenheim (DE)
(74) Vertreter: Sparing - Röhl - Henseler Patentanwälte

(57) **Zusammenfassung**

Die Erfindung betrifft eine Dockingstation zum Einsetzen eines Kleincomputers zum Anschließen von Hardware-Zusätzen. Zum Kommunizieren mit einem Kleincomputer ist vorgesehen, daß die Dockingstation ausgebildet ist mit einer ersten äußeren Schnittstelle für einen lösbaren Anschluß des Kleincomputers, mindestens einer zweiten äußeren Schnittstelle für einen lösbaren Anschluß eines Personalcomputers oder eines Peripheriegerätes und einer umschaltbaren inneren Schnittstelle, die steuerbar Datenleitungen zur Datenübertragung zwischen der ersten äußeren Schnittstelle für den Kleincomputer und einem eingebauten Funktionselement oder der mindestens einen zweiten äußeren Schnittstelle trennbar schließt.

## Beschreibung

Die Erfindung betrifft eine Dockingstation als Erweiterung für einen Kleincomputer, um Hardware-Zusätze anschließen zu können.

Kleincomputer, insbesondere Pocketcomputer, werden wegen ihrer Handlichkeit und Leistungsstärke mittlerweile verstärkt im mobilen Einsatz verwendet, wo sie als voll ausgestattete Computer die Bearbeitung und Abwicklung von Geschäftsvorgängen durch schnellen Zugriff auf Daten und Datenverarbeitung wesentlich vereinfachen.

Zur Übertragung der Daten aus oder in den Kleincomputer sind an dessen Schnittstelle je nach Austauschzweck verschiedene Geräte, wie beispielsweise ein Modem, ein PC oder ein Peripheriegerät, anschließbar. Hierzu erforderlich ist jeweils eine Verkabelung oder eine Steckverbindung, wobei die verschiedenen Geräte zudem nur alternativ zueinander anschließbar sind. Die Verbindung eines Kleincomputers mit anderen gebräuchlichen Geräten ist somit aufwendig und, bedingt durch das individuelle und häufige Lösen, störungsanfällig.

Aufgabe der Erfindung ist es daher, eine Dockingstation zum Einsetzen eines Kleincomputers zu schaffen, die das Kommunizieren mit einem Kleincomputer vereinfacht.

Diese Aufgabe wird durch die Merkmale des Anspruchs 1 gelöst.

Hierdurch wird eine Dockingstation zum Einsetzen eines Kleincomputers geschaffen, die eine umschaltbare Verbindung des Kleincomputers mit entweder einem eingebauten Funktionselement oder mindestens einer zweiten äußeren Schnittstelle zum Anschluß eines gebräuchlichen elektronischen Gerätes ermöglicht. Die innere Schnittstelle schließt oder unterbricht bedarfsbezogen Datenleitungen zwischen dem Kleincomputer und mindestens einem von mehreren gleichzeitig über die Dockingstation an den Kleincomputer angeschlossenen Kommunikationspartnern. Zur Datenübertragung wird vorzugsweise jeweils ein Kommunikationspfad zwischen zwei Kommunikationspartnern unter Abtrennung der übrigen Kommunikationspartner eingerichtet.

Dazu laufen die zu der ersten äußeren Schnittstelle und damit zum Kleincomputer geführten Datenleitungen jeweils über die innere Schnittstelle, die für eine wahlweise selektive Verbindung sorgt. Die Dockingstation enthält ein Datenleitungssystem mit einzelnen Datenleitungsästen, die anfangsseitig jeweils an einen Kommunikationspartner anschließbar sind und endseitig an einem Schnittstellenumschalter liegen können, der vorzugsweise jeweils zwei ausgewählte Astenden verbindet oder trennt. Die für einen Wechsel erforderliche Umschaltung kann mechanisch oder Software gesteuert erfolgen.

Die innere Schnittstelle wird folglich herangezogen, um den Kleincomputer mit anderen elektronischen Geräten, insbesondere den gebräuchlichsten wie Modems, PCs oder Peripheriegeräten, kommunizieren zu lassen, und zwar ohne aufwendiges Anschließen und/oder Lösen von Verkabelungen bei einem Wechsel dieser Geräte.

Die umschaltbare innere Schnittstelle kann aber auch zusätzlich dazu genutzt werden, die an sich zur Kommunikation mit dem Kleincomputer über die Dockingstation an den Kleincomputer anschließbaren Geräte zur Kommunikation untereinander und/oder zur isolierten Arbeitsweise zu befähigen. So kann das Funktionselement, beispielsweise ein Modem, zum Datenfernaustausch direkt mit eimen PC oder einem Peripheriegerät, das mit der mindestens einen zweiten äußeren Schnittstelle der Dockingstation verkabelt ist, kommunizieren. Die Dockingstation dient hier als externes Modem für beispielsweise einen PC. Ebenfalls kann ein solches Modem, das über die innere Schnittstelle vom Kleincomputer als auch von der mindestens einen zweiten äußeren Schnittstelle abgetrennt ist, als Stand-Alone-Einheit, z.B. als elektronischer Briefkasten, arbeiten.

Bei dem eingebauten Funktionselement handelt es sich vorzugsweise um ein Modem, insbesondere ein Funkmodem mit aufsetzbarer Antenne, das über ein Telekommunikationsnetz eine Fernübertragung von Daten von oder zu dem Kleincomputer ermöglicht. Die Dockingstation ist dann ein mobiles Kommunikationsinstrument, mit dem jederzeit und überall Daten gesendet, empfangen und durch den einlegbaren Kleincomputer verarbeitet werden können. Die Dockingstation ist ferner als ein handliches Gerät gestaltbar, das, wie der Kleincomputer, jederzeit mitgeführt werden kann. Kleincomputer und Dockingstation bilden somit eine mobile Kommunikationseinheit, die orts- und zeitunabhängig über Datenfernaustausch mit anderen Kommunikationspartnern, beispielsweise einem stationären PC oder einem FAX, kommunizieren kann.

Anstelle eines Modems kann als Funktionselement alternativ oder im Austausch hierzu eine Festspeicherplatte vorgesehen sein, die die Speicherkapazität des Kleincomputers wesentlich erhöht.

Vielfach unterscheidet sich die Norm der an die Dockingstation anschließbaren Schnittstelle des Kleincomputers von der der Kommunikationspartner, so daß ein Interface vorgesehen sein kann, über das der Austausch von Daten erfolgt.

Weiterhin kann zwischen der inneren Schnittstelle und der mindestens einen zweiten äußeren Schnittstelle ein Treiber geschaltet sein, der zur Umsetzung von Signalen dient, um die Daten aufbereitet an Peripheriegeräte weitergeben zu können.

Zur Vereinfachung des Anschlusses von Geräten an die mindestens eine zweite äußere Schnittstelle ist diese vorzugsweise als serielle Schnittstelle, insbesondere als Rs232-Schnittstelle, ausgelegt.

Für eine Stromversorung der elektronischen Bauteile der Dockingstation und gegebenenfalls des Kleincomputers kann eine gemeinsame Stromversorgung vorgesehen sein, die über ein stationäres Versorgernetz oder durch eine in die Dockingstation einsetzbare Stromquelle, insbesondere einen wechselbaren Akku, gespeist werden kann.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
- Fig. 1: zeigt diagrammartig einen Aufbau eines Ausführungsbeispiels einer Dockingstation zum Einsetzen eines Kleincomputers,
- Fig. 2a - 2d: zeigen verschiedene geschlossene und geöffnete Kommunikationspfade einer Dockingstation gemäß Fig. 1.

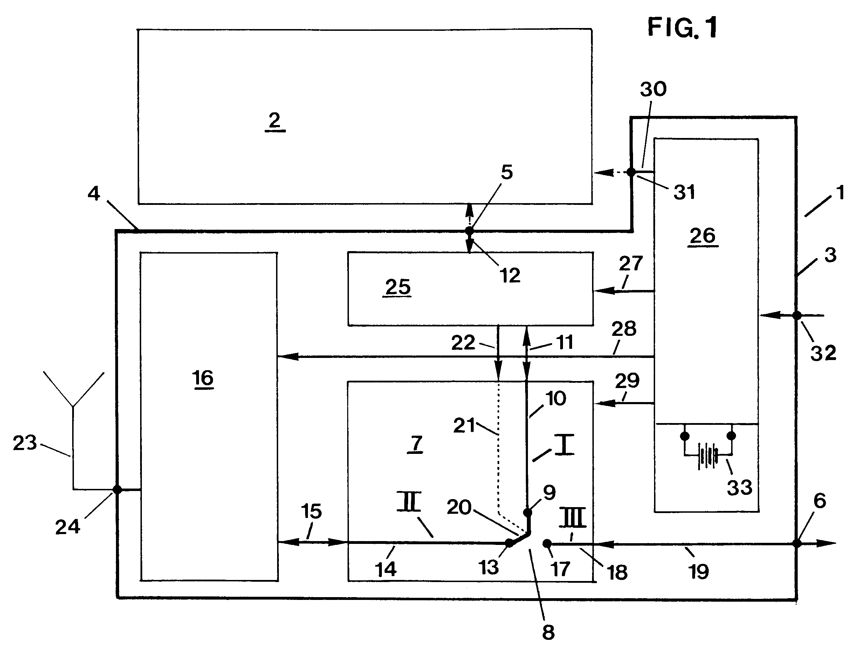

Fig. 1 zeigt eine Dockingstation 1, in die ein Kleincomputer 2 lösbar einlegbar ist. Bei dem Kleincomputer 2 handelt es sich vorzugsweise um einen Computer in Taschenformat, der ein voll ausgestatteter Computer ist, dessen Abmessungen aber lediglich im Größenordnungsbereich eines Brillenetuis liegen. Ein solcher Kleincomputer 2 ist für den mobilen Einsatz vorgesehen.

Die Dockingstation 1 besitzt vorzugsweise handliche Abmessungen, ein sogenanntes Hand-Hold-Format, um zusammen mit dem Kleincomputer 2 als mobile Kommunikationsstation mitgeführt werden zu können.

Die Dockingstation 1 umfaßt ein Gehäuse 3 mit einer Ausnehmung 4 zur lösbaren Aufnahme des Kleincomputers 2. Im Bereich der Ausnehmung 4 weist die Dockingstation 1 an dem Gehäuse 3 eine erste äußere Schnittstelle 5 für einen lösbaren Anschluß des Kleincomputers 2 auf. Vorzugsweise ist die erste äußere Schnittstelle 5 derart angeordnet, daß sie bei eingelegtem Kleincomputer 2 zur Schnittstelle des Kleincomputers 2 ausgerichtet ist. Über eine einfache Schnittstellensteckverbindung kann dann eine Verbindung zur Übertragung von Daten erreicht werden, die zudem zur Arretierung des Kleincomputers 2 in der Dockingstation 1 genutzt werden kann.

Die Dockingstation 1 weist ferner mindestens eine zweite äußere Schnittstelle 6 an dem Gehäuse 3 auf, die zur Übertragung von Daten mit einem gebräuchlichen elektronischen Gerät, wie einem PC oder einem Peripheriegerät, verkabelt werden kann. Bei der zweiten äußeren Schnittstelle handelt es sich vorzugsweise um eine Rs232-Schnittstelle, wobei Rs232 die Bezeichnung der Elektroindustrie für einen Standard ist, der festlegt, welche Aufgaben die verschiedenen Kontakte einer seriellen Schnittstelle übernehmen. Nach diesem Standard richten sich mittlerweile viele Computerhersteller und Peripheriegeräteproduzenten.

Die Dockingstation 1 besitzt einen bausteinartigen inneren Aufbau. Kernbaustein ist unter anderem eine innere Schnittstelle 6 mit einem Schnittstellenumschalter 8 zum wahlweisen Herstellen einer Datenleitungsverbindung zwischen verschiedenen Datenleitungsästen I, II und III zum Aufbau bestimmter Kommunikationspfade. In jeder Schaltstellung sind bestimmte Kommunikationspfade unterbrochen (offen), andere geschlossen. Durch Betätigung des Schnittstellenumschalters 8 werden offene Kommunikationspfade geschlossen, geschlossene Kommunikationspfade unterbrochen. Desweiteren kann der Schnittstellenumschalter 8 auch eine Ruhestellung einnehmen, bei der alle Kommunikationspfade offen sind.

Wie aus Fig. 1 ersichtlich, ist ein erster Datenleitungsast I vorgesehen, der ausgehend von einem Anschlußstück 9 des Schnittstellenumschalters 8 über Datenleitungen 10, 11, 12 mit der ersten äußeren Schnittstelle 5 kommunikationsfähig verbunden ist. Ein zweiter Datenleitungsast II ist ausgehend von einem Anschlußstück 13 des Schnittstellenumschalters 8 über Datenleitungen 14, 15 kommunikationsfähig mit einem in die Dockingstation 1 integrierten Funktionselement 16 verbunden. Ein dritter Datenleitungsast III ist ausgehend von einem Anschlußstück 17 des Schnittstellenumschalters 8 über Datenleitungen 18, 19 kommunikationsfähig mit der mindestens einen zweiten äußeren Schnittstelle 6 verbunden.

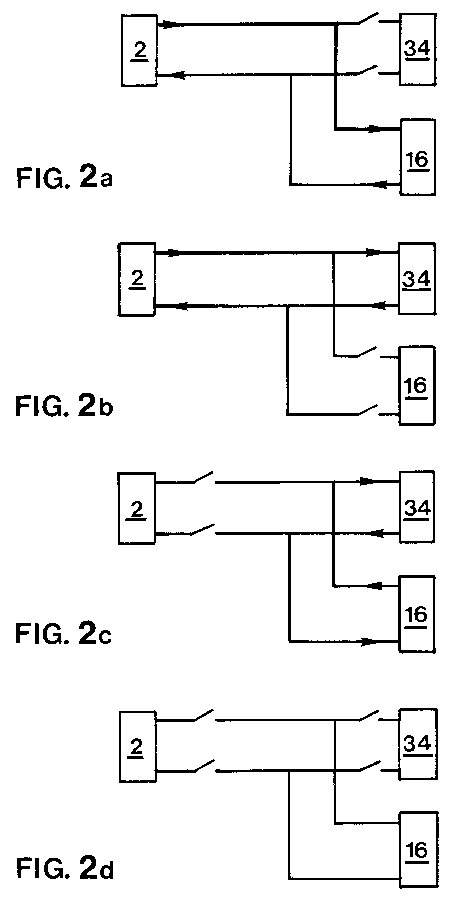

Mittels eines Schaltstücks 20 des Schnittstellenumschalters 8 können wahlweise jeweils zwei der Anschlußstücke 9, 13, 17 miteinander verbunden werden zum Schließen eines Kommunikationspfades aus zwei der Datenleitungsäste I, II und III und unter gleichzeitigem Öffnen anderer Kommunikationspfade. In Fig. 1 dargestellt ist ein geschlossener Kommunikationspfad aus Datenleitungsast I und II und geöffnete Kommunikationspfade aus Datenleitungsast I und III sowie aus Datenleitungsast II und Datenleitungsast III. Die verschiedenen möglichen Schaltstellungen sind in den Figuren 2a bis 2d dargestellt und werden nachfolgend noch näher beschrieben.

Die wahlweise Umschaltung kann mechanisch oder Software gesteuert erfolgen. Bevorzugt ist eine Software gesteuerte Umschaltung, wozu Steuerleitungen 21, 22 und 12 vorgesehen sind, die zur Steuerung der Stellung des Schaltstücks 20 eine Weiterleitung von Befehlen über die erste äußere Schnittstelle 5 erlauben. Eine Befehlseingabe kann dann über den eingelegten Kleincomputer 2 erfolgen. Eine solche logische Steuerung der Umschaltung ist verschleißärmer als eine mechanisch physikalische.

Das Funktionselement 16 ist vorzugsweise als Modem, insbesondere als Funkmodem mit zugeordneter Antenne 23 ausgebildet. Die Antenne 23 kann über einen Steckanschluß 24 am Gehäuse 3 der Dockingstation 1 angeschlossen werden. Alternativ kann das Funktionselement 16 als Festspeicherplatte ausgebildet sein.

Weiterhin kann die innere Schnittstelle 7 einen Treiber aufweisen, der in den Datenleitungsast III geschaltet ist, um die Datensignale umgesetzt an die zweite äußere Schnittstelle 6 zu liefern.

Zur Anpassung der Normen der Schnittstelle des Kleincomputers 2 und der Schnittstelle anderer Kommunikationspartner, wie des Funktionselements 16 oder Geräte, die an die zweite äußere Schnittstelle 6 anschließbar sind, kann ein Interface 25 vorgesehen sein, das zur Datenübertragung zwischen erster äußerer Schnittstelle 5 und innerer Schnittstelle 7 eine Datenaufbereitung vornimmt. Die Datenleitungen 10, 11, 12 des Datenleitungsastes I führen dann ausgehend vom Anschlußstück 9 zuerst zum Interface 25 und von dort zur ersten äußeren Schnittstelle. Gleiches kann für die Steuerleitungen 21, 22 und 12 gelten, die im Kommunikationspfad zwischen Interface 25 und erster äußerer Schnittstelle 5 mit der Datenleitung 12 laufen können.

Zur Stromversorgung der in die Dockingstation 1 eingebauten elektronischen Bauteile 7, 16, 25, und gegebenenfalls des Kleincomputers 2, kann eine gemeinsame Stromversorung 26 vorgesehen sein. Dazu kann eine Versorgungsleitung 27 zum Interface 25, eine Versorgungsleitung 28 zum Funktionselement 16, eine Versorgungsleitung 29 zur inneren Schnittstelle 7 und dem zugeordneten Treiber und gegebenenfalls eine Versorgungsleitung 30 zu einem Steckverbinder 31 für einen Anschluß des eingelegten Kleincomputers 2 vorgesehen sein. Die Stromversorgung 26 kann gespeist werden über ein Versorgernetz, das über einen Steckverbinder 32 am Gehäuse 3 Zugriff auf die Stromversorgung 26 hat. Für einen mobilen Einsatz der Dockingstation 1, unabhängig von einem stationären Versorgernetz, kann auch zusätzlich oder alternativ ein wechselbarer Akku 33 vorgesehen sein.

Unter Bezugnahme auf die Fig. 2a bis 2d werden jetzt die verschiedenen Kombinationsmöglichkeiten für eine Errichtung von Kommunikationspfaden unter Verwendung der Dockingstation 1 beschrieben. Das durch den Aufbau der Dockingstation 1 erreichte modulare System erlaubt das individuelle Ansprechen verschiedener Kommunikationspartner.

Zwischen drei Kommunikationspartnern sind dabei Kommunikationspfade durch Schließen und Öffnen von Datenleitungen aufbaubar, wobei als Kommunikationspartner hier der Kleincomputer 2, ein an die zweite äußere Schnittstelle 6 anschließbarer PC 34 und ein Modem als Funktionselement 16 gewählt werden.

Verbindet das Schaltstück 20 die Anschlußstücke 6 und 13, dann sind, wie in Fig. 2a gezeigt, die Datenleitungen zwischen dem Kleincomputer 2 und dem Modem 16 geschlossen und die Datenleitungen zwischen dem Kleincomputer 2 und dem PC 34 sowie zwischen dem PC 34 und dem Modem 16 geöffnet. Es liegt ein Kommunikationspfad zwischen Kleincomputer 2 und Modem 16 zur Übertragung von Daten vor. Über das Modem 16 können vom Kleincomputer 2 Daten gesendet oder empfangen werden.

Verbindet das Schaltstück 20 die Anschlußstücke 9 und 17, dann sind, wie in Fig. 2b gezeigt, die Datenleitungen zwischen dem Kleincomputer 2 und dem PC 34 geschlossen und die Datenleitungen zwischen dem Kleincomputer 2 und dem Modem 16 sowie zwischen dem PC 34 und dem Modem 16 geöffnet. Es liegt ein Kommunikationspfad zwischen Kleincomputer 2 und PC 34 zur Übertragung von Daten vor. Ein Datenaustausch zwischen den beiden Computern 2, 34 ist möglich.

Verbindet das Schaltstück 20 die Anschlußstücke 13 und 17, dann sind, wie in Fig. 2c gezeigt, die Datenleitungen zwischen dem PC 34 und dem Modem 16 geschlossen und die Datenleitungen zwischen dem Kleincomputer 2 und dem PC 34 sowie zwischen dem Kleincomputer 2 und dem Modem 16 geöffnet. Es liegt ein Kommunikationspfad zwischen PC 34 und Modem 16 zur Übertragung von Daten vor. Über das Modem 16 der Dockingstation 1 können vom PC 34 Daten empfangen und gesendet werden. Der Kleincomputer 2 ist vom Kommunikationspfad abgetrennt; allein auf die Steuerleitungen 12, 22 und 21 ist sein Einfluß beschränkt.

Ist der Schnittstellenumschalter 8 in seiner Ruhestellung, dann sind, wie in Fig. 2d gezeigt, die Datenleitungen zwischen allen Kommunikationspartnern 2, 34 und 16 geöffnet. Das Modem 16 kann dann im Stand-Alone-Betrieb für den Kleincomputer 2 und/oder den PC 34 Daten emfpangen und speichern.

Gemäß weiterer, nicht dargestellter, Ausführungsbeispiele können neben der einen zweiten äußeren Schnittstelle 6 weitere zweite äußere Schnittstellen für eine Kommunikationsverbindung mit weiteren gebräuchlichen Geräten vorgesehen sein. Zu diesen kann jeweils ein zusätzlicher Datenleitungsast führen, der über den Schnittstellenumschalter 8 kommunikationsfähig verbindbar ist. Gleiches gilt für einen Einbau einer Festspeicherplatte in die Dockingstation 1 zusätzlich zu einem Modem.

## Patentansprüche

1. Dockingstation (1) zum Einsetzen eines Kleincomputers (2) mit einer ersten äußeren Schnittstelle (5) für einen lösbaren Anschluß des Kleincomputers (2), mindestens einer zweiten äußeren Schnittstelle (6) für einen lösbaren Anschluß eines Personalcomputers (34) oder eines Peripheriegerätes und einer umschaltbaren inneren Schnittstelle (7), die steuerbar Datenleitungen (10, 11, 12, 14, 15, 18, 19) zur Datenübertragung zwischen der ersten äußeren Schnittstelle (5) für den Kleincomputer (2) und einem eingebauten Funktionselement (16) oder der mindestens einen zweiten äußeren Schnittstelle (6) trennbar schließt.

2. Dockingstation nach Anspruch 1, dadurch gekennzeichnet, daß die innere Schnittstelle (7) zusätzlich wahlweise Datenleitungen (14, 15, 18, 19) zur Datenübertragung zwischen dem Funktionselement (16) und der mindestens einen zweiten äußeren Schnittstelle (6) unter Abtrennung von Datenleitungen (10, 11, 12) zur ersten äußeren Schnittstelle (5) trennbar schließt.

3. Dockingstation nach Anspruch 1 oder 2, dadurch gekennzeichnet, daß die innere Schnittstelle (7) mittels eines Schnittstellenumschalters (8) jeweils die Datenleitungen zwischen zwei angeschlossenen Kommunikationskomponenten trennbar schließt unter Abtrennung der übrigen Datenleitungen.

4. Dockingstation nach einem der Ansprüche 1 bis 3, dadurch gekennzeichnet, daß die innere Schnittstelle (7) einen Schnittstellenumschalter (8) aufweist, der über vom Kleincomputer (2) ansprechbare Steuerleitungen (21, 22, 12) softwaregesteuert umschaltbar ist.

5. Dockingstation nach einem der Ansprüche 1 bis 4, dadurch gekennzeichnet, daß das Funktionselement (16) ein Modem ist.

6. Dockingstation nach Anspruch 5, gekennzeichnet durch eine Ausbildung als handliches Mobilgerät mit einem Funkmodem als Modern, dem eine Antenne (23) zugeordnet ist.

7. Dockingstation nach einem der Ansprüche 1 bis 4, dadurch gekennzeichnet, daß das Funktionselement (16) von einer Festspeicherplatte gebildet wird.

8. Dockingstation nach einem der Ansprüche 1 bis 7, dadurch gekennzeichnet, daß die innere Schnittstelle (7) mit der ersten äußere Schnittstelle (5) über ein Interface (25) zur Anpassung unterschiedlicher Normen verbunden ist.

9. Dockingstation nach einem der Ansprüche 1 bis 8, dadurch gekennzeicnet, daß die mindestens eine zweite äußere Schnittstelle (6) eine genormte Schnittstelle für serielle Datenübertragung ist.

10. Dockingstation nach einem der Ansprüche 1 bis 9, dadurch gekennzeichnet, daß die innere Schnittstelle (7) mit der mindestens einen zweiten äußeren Schnittstelle (6) über einen Treiber verbunden ist.

11. Dockingstation nach einem der Ansprüche 1 bis 10, dadurch gekennzeichnet, daß eine gemeinsame Stromversorgung (26) für die internen Bauteile (7, 16, 25) und gegebenenfalls den Kleincomputer (2) eingebaut ist.

12. Dockingstation nach Anspruch 11, dadurch gekennzeichnet, daß die Stromversorgung (26) über einen integrierten Akku (33) speisbar ist.
